# EUROPÄISCHE PATENTSCHRIFT

(11) **EP 2 125 972 B1**
(45) Veröffentlichungstag und Bekanntmachung des Hinweises auf die Patenterteilung: **06.10.2010**
(21) Anmeldenummer: 07848036.5
(22) Anmeldetag: 11.12.2007
(51) Int. Cl.: C09D 5/08, C09D 4/00, C09D 133/06, C09D 131/02

(54) **POLYMERISIERBARE ZUSAMMENSETZUNG ZUM BESCHICHTEN VON METALLEN**
POLYMERIZABLE COMPOSITION FOR COATING METALS
COMPOSITION POLYMÉRISABLE DESTINÉE À L'ENDUCTION DE MÉTAUX

(30) Priorität: 27.03.2007 DE 10715161
(43) Veröffentlichungstag der Anmeldung: 02.12.2009
(73) Patentinhaber: Henkel AG & Co. KGaA, 40589 Düsseldorf (DE)
(72) Erfinder: SANDER, Jörg, 42549 Velbert (DE); ENDRES, Holger, 41470 Neuss (DE); STODT, Jürgen, 41466 Neuss (DE)
(86) Internationale Anmeldenummer: PCT/EP2007/063646
(87) Internationale Veröffentlichungsnummer: WO 2008/116511

(56) Entgegenhaltungen:
- WO-A-2007/033736
- DE-A1- 19 923 118

## Beschreibung

Die vorliegende Erfindung betrifft eine polymerisierbare Zusammensetzung und ein Verfahren zur korrosionsschützenden Beschichtung von metallischen Oberflächen, insbesondere Stahl, verzinktem und legierungsverzinktem Stahl als auch von Aluminium und seinen Legierungen. Die polymerisierbare Zusammensetzung enthält dabei vorzugsweise weniger als 10 Gew.-% Anteile, die nicht in die ausgehärtete Beschichtung eingebaut werden. In einem weiteren Aspekt betrifft die Erfindung die Verwendung der erfindungsgemäßen Zusammensetzung zur Beschichtung von Werkstücken bestehend aus den genannten Metallen, insbesondere von metallischen Oberflächen in Bandanlagen (Coil-Coating). Die vorliegende Erfindung umfasst daher auch die Verwendung erfindungsgemäß beschichteter metallischer Oberflächen für die Herstellung von "Weißer Ware", Automobilkarosserien, Gehäusen elektronischer Bauteile und für das Baugewerbe und den Transportsektor.

Zum temporären Korrosionsschutz von verzinkten oder legierungsverzinkten Stahlbändern werden diese entweder nur mit Korrosionsschutzölen eingeölt oder bei zu erwartenden höheren Korrosionsbeanspruchungen phosphatiert oder chromatiert. Vor der endgültigen Beschichtung mit organischen Bindemitteln (Primer, Lacken) folgt in der Regel ein mehrstufiger Prozess. Für die Verwendung von verzinktem Metallband oder Aluminium und seinen Legierungen in der Haushaltsgeräte- und Architekturindustrie wird dabei, ggf. nach vorheriger Entfernung der Ölschicht, die Metalloberfläche zuerst mit einer Korrosionsschutzschicht versehen. Die beste im Stand der Technik bekannte Korrosionsschutzmaßnahme ist eine Chromatierung, bei der die Metalloberfläche mit einer Chrom (III)- und/oder Chrom (VI)-haltigen Schicht mit in der Regel 5 bis 15 mg/m² Chrom überzogen wird. Eine Phosphatierung als alternative Maßnahme zum temporären Korrosionsschutz hat zweierlei Nachteile: Zum einen kann das Aussehen der Metalloberflächen in unerwünschter Weise verändert werden. Zum anderen ist eine Phosphatierung anlagentechnisch sehr aufwendig, da sie je nach Substratmaterial eine zusätzliche Aktivierungsstufe und in der Regel nach der Phosphatierung eine Passivierungsstufe erfordert. Über den eigentlichen Korrosionsschutz hinaus gewährleistet die anorganische Beschichtung eine gute Haftung zum darauf aufgetragenen Primer. Der Primer wiederum beeinflusst nicht nur die Korrosionsschutzwirkung der anorganischen Konversionsschicht günstig, die Primerschicht bietet ihrerseits wiederum dem Decklack eine gute Haftgrundlage.
In zunehmendem Maße werden auch Bleche vom Bandveredler mit einer Vorbeschichtung ausgeliefert, die z.B. die mechanische Bearbeitung wie Stanzen, Bohren, Falzen, Profilieren und/oder Tiefziehen erleichtert. Diese Vorbeschichtung muss dem Blech dabei neben den korrosionshemmenden auch die mechanische Bearbeitung erleichternde Eigenschaften verleihen. Eine weitere Funktion solcher Vorbeschichtungen ist es, nachfolgenden ästhetischen Deckbeschichtungen eine Haftgrundlage zu bieten. Ein aus solchermaßen vorbeschichtetem Blechmaterial durch mechanische Bearbeitung hergestelltes Werkstück kann dann abschließend mit einem Decklack versehen werden. In bevorzugter Weise dient die erfindungsgemäße Vorbeschichtung weiterhin als Primer, wobei die Deckbeschichtung unmittelbar anschließend in der Coil-Coating-Anlage erfolgt. In diesem Falle wird erst das vollbeschichtete Blechmaterial der Weiterverarbeitung zugeführt. Nach dem Stand der Technik besteht das Coil-Coating-Verfahren im Wesentlichen aus drei Teilschritten. In einem ersten Schritt wird das Metallband gereinigt und mit einer (anorganischen) Vorbehandlungsschicht versehen, im zweiten Schritt erfolgt die Lackgrundierung (Primer), und im abschließenden dritten Verfahrensschritt die Decklackierung. In einigen Einsatzfällen können zusätzlich Klarlack- oder Schutzfolienüberzüge aufgebracht werden. Es sind Versuche bekannt, bereits mit dem Vorbehandlungsschritt solche Funktionen zur Verfügung zu stellen, die den Einsatz im Sinne der oben genannten Vorbeschichtung ermöglichen. Zu diesem Zweck wird beispielsweise der anorganischen Konversionsbehandlung ein geeignetes organisches Polymer hinzugefügt, das in der Lage ist, einen Oberflächenfilm mit den von einer Vorbeschichtung geforderten funktionellen Eigenschaften auszubilden.

In der EP-A-685534 wird ein Verfahren zum Schutz eines Stahlsubstrates durch einen dünnen Film eines organisch-anorganischen Hybrid-Polymers auf der Basis eines Alkoxysilans, einer weiteren kondensierbaren Organometallverbindung der Formel M(OR)₄ sowie (Meth)acrylsäure, Wasser und einem Polymerisationsinitiator beschrieben. Die Beschichtung wird durch thermische oder Photopolymerisation bewirkt. Als Metalle für die Organometallverbindung werden Zircon und Titan genannt. Es wird angegeben, dass ein derartiger Film Stahlsubstrate gegen Korrosion und Oxidation schützt, außerdem soll das Substrat durch diese Beschichtung gegen Schock und andere mechanische Effekte geschützt werden.

Die DE 197 51 153 beschreibt polymerisierbare chromfreie organische Zusammensetzungen enthaltend Titan-, Mangan- und/oder Zirkoniumsalze von olefinisch ungesättigten polymerisierbaren Carbonsäuren und weiteren olefinisch ungesättigten Comonomeren sowie einen Initiator zur radikalischen Polymerisation und deren Verwendung zur organischen Coilbeschichtung von metallischen Werkstoffen. Diese nicht wässrigen polymerisierbaren Zusammensetzungen erlauben eine chromfreie Vorbehandlung von Stahlwerkstoffen mit Korrosionsschutzeigenschaften.

Die WO 00/69978 (DE.A.19923118) beschreibt ein polymerisierbares chromfreies Korrosionsschutzmittel, enthaltend Metallkomplexe einer α-ungesättigten Carbonsäure der allgemeinen Formel (1): 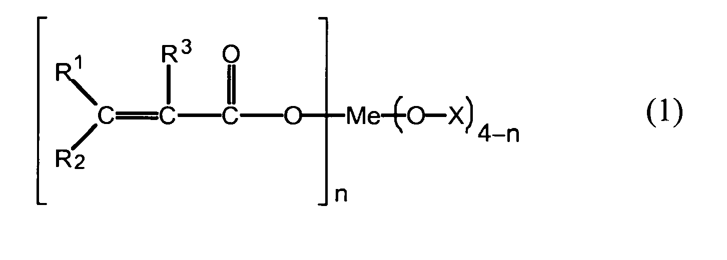 worin R¹ und/oder R² H, C₁- bis C₁₂-Alkyl, Aralkyl oder die Gruppe -CO-O-Y,
R³ = H oder C₁- bis C₁₂-Alkyl,
Me = ein Titan-, Silicium- oder Zirconiumion,
X = H, C₁- bis C₁₂-Alkyl, Aryl oder Aralkyl, Alkoxyl, Aroxyl, Sulfonyl, Phosphat, Pyrophosphat,
Y = H, C₁- bis C₁₂-Alkyl oder Me, und n = 0 bis 4 ist,
mindestens ein weiteres olefinisch ungesättigtes Comonomer mit mindestens zwei olefinisch ungesättigten Doppelbindungen pro Molekül,
gegebenenfalls weitere Comonomere mit einer olefinisch ungesättigten Doppelbindung pro Molekül,
mindestens einen Initiator zur radikalischen und/oder kationischen Polymerisation.

Die noch unveröffentlichte DE 102005045441.0 WO.A.2007/033736 gemäß Artikel 54(3) EPÜ nach Artikel 153(3)(4) EPÜ) beschreibt für eine korrosionsschützende und antimikrobiell wirkende Beschichtung polymerisierbare chromfreie organische Zusammensetzungen enthaltend Metallkomplexe derivatisierter α-ungesättigter Carbonsäuren der allgemeinen Formel (2): 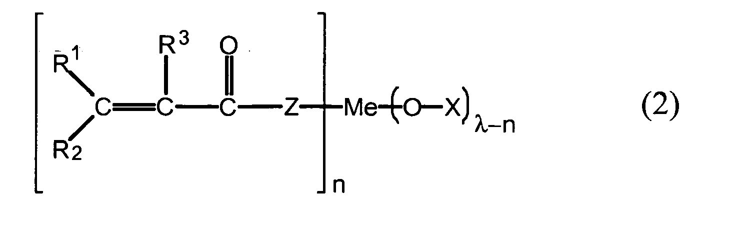 worin R¹ und/oder R² H, C₁- bis C₁₂-Alkyl, Aralkyl oder die Gruppe -CO-O-Y,
R³ = H oder C₁- bis C₁₂-Alkyl,
Me = ein Metallatom mit einer Oxidationsstufe von λ ausgewählt aus Silicium, Titan, Zirkon, Mangan, Zink, Vanadium, Molybdän und Wolfram,
X = H, C₁- bis C₁₂-Alkyl, Aryl, Aralkyl, Alkoxyl oder Aroxyl oder 2(-O-X) = Acetylacetonat,
Y = H, C₁- bis C₁₂-Alkyl oder ein weiteres Metallion Me sein können,
Z ausgewählt ist aus O, NH, einer Gruppe O-Z^{b}-C(=O)-O, einer Gruppe O- Z^{b} -P(=O)-O, einer Gruppe O- Z^{b} -P(=O)₂-O, einer Gruppe O- Z^{b} -O -P(=O)-O, einer Gruppe O- Z^{b} - O -P(=O)₂-O, einer Gruppe O- Z^{b} -S(=O)₂-O, einer Gruppe O- Z_{b} -O - S(=O)₂-O, wobei Z^{b} eine organische Gruppierung darstellt,
und n = 0 bis λ, vorzugsweise 1 bis (λ -1) ist, wobei λ die Oxidationsstufe des Metalls Me bedeutet.

Eine bevorzugte Derivatisierung zur Gewährleistung eines hinreichenden Korrosionsschutzes durch die ausgehärtete Beschichtung ist im Sinne der vorstehend genannten Erfindung die Kondensation von Hydroxyethylmethacrylat mit Bernsteinsäureanhydrid und den entsprechenden Titan-Alkoholaten zu Metallkomplexen, die der allgemeinen Formel (2) entsprechen.

Trotz des umfangreichen Standes der Technik besteht weiterhin Bedarf an verbesserten Korrosionsschutzmitteln und Beschichtungsverfahren für Metalloberflächen, die eine chromfreie Vorbehandlung der metallischen Substrate bei gutem Korrosionsschutz unter Vermeidung starker Säuren und hoher Fluoridkonzentrationen ermöglichen. Dabei sollen die Bestandteile vorzugsweise homogen in der Zusammensetzung gelöst oder dispergiert sein, um Entmischungen während der Herstellung, des Transports, der Lagerung und der Anwendung zu vermeiden.
Die im Stand der Technik üblicherweise bevorzugte Auftragung der Beschichtung im Coil-Coating Verfahren, bei dem die zu beschichtenden Metallbänder auf Transportbändern mit Bandgeschwindigkeiten von bis zu 200 m/min vom "Coil" ab- bzw. aufgewickelt werden, bedingt, dass das aufgetragene Beschichtungsmittel in kürzester Zeit vollständig ausgehärtet werden muss.
Die Beschichtung selbst muss der Anforderung genügen, dass das Ausstanzen und Umformen der Bauteile aus den beschichteten Metallbändern ohne Verlust der korrosionsschützenden Eigenschaften, d.h. ohne Enthaftung oder Zerstörung der Beschichtung im umgeformten Bereich, erfolgt. Weiterhin sollen die Schichten der Metallsubstrate die weiteren Fertigungsschritte bis zum Zusammenbau der Produkte wie beispielsweise Reinigen, gegebenenfalls Phosphatieren, Nieten, Schweißen überstehen und entweder direkt oder nach der mechanischen Bearbeitung mit einem Decklack überlackierbar sein. Aus Gründen des Umwelt- und Arbeitsschutzes soll das Behandlungsverfahren ohne den Einsatz von Chromverbindungen und möglichst auch unter Ausschluss von organischen Lösungsmitteln durchführbar sein.

Zusammenfassend stellt sich die vorliegende Erfindung die Aufgabe, ein Beschichtungsmittel für Metalloberflächen zur Verfügung zu stellen, das
1. dafür geeignet ist, im Coil-Coating-Verfahren aufgebracht werden zu können,
2. thermisch oder durch Einwirkung energiereicher Strahlung wie beispielsweise UV-Strahlung härtbar ist,
3. im ausgehärteten Zustand bei einem Schichtgewicht von nicht mehr als 25 g/m² einen ausreichenden Korrosionsschutz bewirkt, wobei die Beschichtung mit dem Mittel die einzige Korrosionsschutzmaßnahme darstellt, und
4. als auf dem metallischen Werkstoff ausgehärtete Beschichtung im T-Bend Test ausgezeichnete Umformeigenschaften aufweist.

Überraschenderweise zeigte sich, dass aufbauend auf die noch unveröffentlichte Anmeldung DE 102005045441.0 (WO.A.2007/033736) durch eine weitere Derivatisierung der eingesetzten polymerisierbaren Metallkomplexe entsprechend der allgemeinen Formel (I) die vorstehende Aufgabenstellung vollumfänglich gelöst wird.

Die zugrunde liegende Erfindung umfasst daher eine polymerisierbare Zusammensetzung für die korrosionsschützende Beschichtung metallischer Oberflächen bzw. Werkstoffe, die mindestens:
a) eine Verbindung entsprechend der allgemeinen Formel (I): 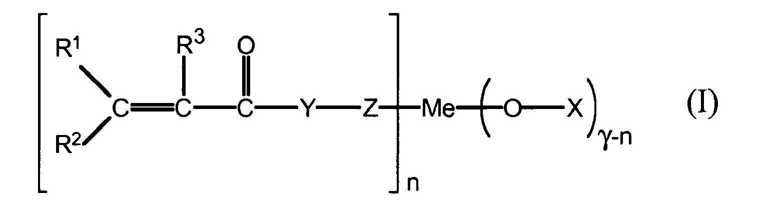 wobei R¹ und R² jeweils unabhängig voneinander ausgewählt sind aus Wasserstoff, C₁-C₁₂-Alkyl-, Arylalkyl-Gruppen oder aus der Gruppe -CO-O-W und W ein Wasserstoff-Atom, eine C₁-C₁₂ Alkyl-Gruppe oder Me ist;
   wobei R³ einem Wasserstoff-Atom oder einer C₁-C₁₂ Alkyl-Gruppe entspricht;
   wobei Me ein Metallatom mit der Oxidationsstufe γ darstellt, welches ausgewählt ist aus der Gruppe bestehend aus Silizium, Titan, Zirkon, Mangan, Zink, Vanadium, Molybdän und Wolfram;
   wobei X ein Wasserstoff-Atom, eine C₁-C₁₂ Alkyl-, eine Aryl- oder eine Aralkyl-Gruppe, eine Alkoxyl- oder Aroxyl-Gruppe darstellt oder 2(-O-X) Acetylacetonat entspricht;
   wobei n = 1 bis γ-1 ist und γ die Oxidationsstufe des Metalls Me bezeichnet;
   wobei Y eine Alkoxyl- oder Polyalkoxyl-Gruppe gemäß der folgenden allgemeinen Formel (II) darstellt: 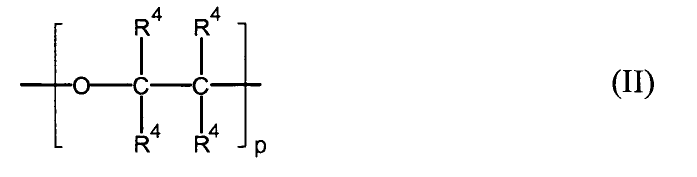 wobei die Gruppe Y über die Oxo-Funktion an den Teil der Verbindung (I) gebunden ist, der die olefinische Doppelbindung trägt;
   wobei die Reste R⁴ jeweils unabhängig voneinander ein Wasserstoff-Atom oder eine lineare Alkyl-Gruppe mit nicht mehr als 6 C-Atomen darstellen; und
   wobei p mindestens 1 aber nicht größer als 10 ist und für den Fall, dass p gleich 1 ist, mindestens ein Rest R⁴ nicht ein Wasserstoff-Atom darstellt;
   wobei die Gruppe Z ausgewählt ist aus:
   O, NH, S, O-C(=O)-Z^{b}-O, O-C(=O)-Z^{b}-NH, O-C(=O)-Z^{b}-S, O-C(=O)-Z^{b}-C(=O)-O, O-C(=O)-Z^{b}-P(=O)-O, O-C(=O)-Z^{b}-P(=O)₂-O, O-C(=O)-Z^{b}-O-P(=O)-O oder O-C(=O)-Z^{b}-O-P(=O)₂-O, wobei Z^{b} eine organische Gruppe darstellt und die Carboxylgruppe -O-C(=O)- an die Gruppe Y gebunden ist; und
b) zusätzlich zur Komponente a) mindestens ein Comonomer oder Cooligomer enthält, das mindestens eine Carboxyl- oder eine Ester-Gruppe und mindestens eine olefinische Doppelbindung aufweist.

In einer bevorzugten Ausführungsform der polymerisierbaren Zusammensetzung ist die Gruppe Z^{b} der Komponente a) ausgewählt aus:
- einer linearen oder verzweigten Alkyl-Gruppe, vorzugsweise aus einer linearen Alkyl-Gruppe -(CH₂)ₓ-, wobei x eine ganze Zahl von 1 bis 10 ist, und insbesondere eine ganze Zahl von 2 bis 4.
- einer linearen oder verzweigten Alkylen-Gruppe mit olefinischen Doppelbindungen, vorzugsweise mit einer Anzahl an C-Atomen in der Hauptkette, die nicht größer als 4 ist, insbesondere Vinylen.
- einer Gruppe von Typ -(CH₂)ₓ-C₆H₄-(CH₂)_{y}-, wobei x und y jeweils unabhängig voneinander ganze Zahlen von 0 bis 4, vorzugsweise von 0 bis 2, und besonders bevorzugt x und y gleich Null sind.

Entsprechend der allgemeinen Formel (I) ist die erfindungsgemäße Verwendung einer Komponente a) bevorzugt, bei der zumindest ein, vorzugsweise zwei und insbesondere sämtliche Reste R₁, R₂ und R₃ jeweils unabhängig voneinander ausgewählt sind aus H, CH₃, C₂H₅; C₃H₇ und C₄H₉.

Des Weiteren basiert die Gruppe Y der Komponente a) in einer bevorzugten Ausführungsform der polymerisierbaren Zusammensetzung auf Oxiran, 2-Methyl-Oxiran, 2,3-Dimethyloxiran und 2-Ethyl-Oxiran, wobei die Anzahl p der konstituierenden Einheiten von Y nicht größer als 6, vorzugsweise nicht größer als 4, aber mindestens gleich 1 und vorzugsweise mindestens 3 ist.

Besonders bevorzugte Ausführungsformen für die Komponente a) sind im Beispielteil angegeben.

Ansprüche 5 bis 6 definieren bevorzugte Komponente b).

Als Komponente b) kann gemäß der vorliegenden Erfindung eine einzelne Verbindung oder - vorzugsweise - ein Gemisch unterschiedlicher Verbindungen vorhanden sein, die jede für sich der weiter oben gegebenen Definition der Komponente b) entsprechen. Dabei ist das Monomer oder Oligomer der Gruppe b) vorzugsweise ausgewählt aus Acrylsäure, Methacrylsäure, Crotonsäure, Vinylessigsäure, Maleinsäure, Fumarsäure und aus Monomeren oder Oligomeren, die mindestens eine derartige Säuregruppe aufweisen, wobei die Carbonsäuregruppen vollständig oder teilweise verestert sein können.

Darüberhinaus kann das Monomer oder Oligomer der Gruppe b) insbesondere ausgewählt sein aus aromatischen oder aliphatischen Urethan-Acrylat- oder Urethan-Methacrylat-Oligomeren sowie Addukten oder Copolymeren von Acrylsäure oder Methacrylsäure oder Hydroxyalkyl-Derivaten hiervon mit ungesättigten Dicarbonsäuren oder mit Anhydriden mehrbasischer Carbonsäuren oder Derivaten hiervon.

Beispiele der genannten ungesättigten Dicarbonsäuren sind Maleinsäure und Fumarsäure. Ein spezielles Anhydrid mehrbasischer Carbonsäuren ist Bernsteinsäure-Anhydrid.

Vorzugsweise ist zumindest ein Teil der Komponente b) ein olefinisch ungesättigtes CoMonomer mit mindestens 2 olefinisch ungesättigten Doppelbindungen pro Molekül. Als Comonomere mit mindestens 2 olefinisch ungesättigten Doppelbindungen pro Molekül eignen sich eine Vielzahl von Comonomeren, z.B. Veresterungsprodukte von Alkanpolyolen, Polyesterpolyolen oder Polyetherpolyolen mit olefinisch ungesättigten Carbonsäuren wie z.B. Acrylsäure, Methacrylsäure, Itaconsäure, Crotonsäure, Maleinsäure, Maleinsäurehalbester, Fumarsäure, Fumarsäurehalbester oder reaktive carboxylgruppenhaltige Makromonomere oder deren Mischungen. Weiterhin eignen sich als Comonomere mit mindestens 2 reaktiven Doppelbindungen pro Molekül (Meth)acrylat-funktionelle Polysiloxane, (Meth)acrylat-funktionelle aliphatische, cycloaliphatische und/oder aromatische Polyepoxide sowie Polyurethan-Verbindungen mit reaktiven (Meth)acrylatgruppen. Typischerweise haben die vorgenannten Comonomeren mit mindestens 2 olefinisch ungesättigten Doppelbindungen pro Molekül Molekulargewichte im Bereich von 600 bis 50000, vorzugsweise zwischen 1000 und 10000.

Konkrete Beispiele für Alkan-Polyole sind 1,4-Butandiol, 1,6-Hexandiol, 1,8-Oktandiol sowie deren höhere Homologe, Glyzerin, Trimethylolpropan, Pentaerythrit sowie deren Alkoxylierungsprodukte.

Weiterhin sind als Polyole die flüssigen Polyester geeignet, die durch Kondensation von Di- bzw. Tricarbonsäuren, wie z.B. Adipinsäure, Sebacinsäure, Glutarsäure, Azelainsäure, Korksäure, 3,3-Dimethyl-glutarsäure,Terephthalsäure, Isophthalsäure, Hexahydrophthalsäure oder Dimerfettsäure mit niedermolekularen Diolen bzw. Triolen wie z.B. Ethylenglykol, Propylenglykol, Diethylenglykol, Triethylenglykol, Dipropylenglykol, 1,4-Butandiol, 1,6-Hexandiol, 1,10-Decandiol, Dimerfettalkohol, Glyzerin oder Trimethylolpropan hergestellt werden können.

Eine weitere Gruppe der erfindungsgemäß einzusetzenden Polyol-Bausteine sind die Polyester auf der Basis von α -Caprolacton, auch "Polycaprolactone" genannt.

Es können aber auch Polyesterpolyole oleochemischer Herkunft verwendet werden. Derartige Polyesterpolyole können beispielsweise durch vollständige Ringöffnung von epoxidierten Triglyzeriden eines wenigstens teilweise olefinisch ungesättigte Fettsäure enthaltenden Fettgemisches mit einem oder mehreren Alkoholen mit 1 bis 12 C-Atomen und anschließender partieller Umesterung der Triglyzerid-Derivate zu Alkylesterpolyolen mit 1 bis 12 C-Atomen im Alkylrest hergestellt werden. Weitere geeignete Polyole sind Polycarbonatpolyole und Dimerdiole sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.
Ansprüche 7 bis 12 definieren weitere bevorzugte Ausführungsformen.
Für die vorliegende Erfindung eignen sich auch eine oder mehrere der radikalisch polymerisierbaren Polyurethan-Verbindungen (A), (B) und/oder (C) der allgemeinen Formel (III):

(H₂C=CR¹-C(=O)-O-R²-O-C(=O)-NH-)ₙ R³ (III)

worin
R¹ = Wasserstoff oder eine Methylgruppe,
R² = eine lineare oder verzweigte Alkylgruppe mit 2 bis 6 C-Atomen oder Alkylenoxide mit 4 bis 21 C-Atomen
und n = 1, 2 oder 3 ist,
(A) wobei R³ für n = 1 ist:
   - eine Arylgruppe mit 6 bis 18 Kohlenstoffatomen,
   - eine geradkettige oder verzweigte Alkylgruppe mit 1 bis 18 C-Atomen oder
   - eine Cycloalkylgruppe mit 3 bis 12 C-Atomen;
(B) R³ für n = 2 ist:

   [-Q-NH-C(=O)]₂](-O-R₄-O-C(=O)-NH-Q'-NH-C(=O))ₘ-O-R₄-O-]

   wobei m = 0 bis 10 ist und R⁴
   a) ein Polycaprolactondiol-Rest
   b) ein Polytetrahydrofurfuryldiol-Rest oder
   c) ein Diol-Rest ist, der sich von einem Polyesterdiol
      ableitet, und ein Molekulargewicht von 1000 bis 20000 hat, oder
(C) R³ für n = 3 ist:

   [-Q-NH-C(=O)-O-((CH₂)₅-C(=O))ₚ-]₃ R⁵,

   wobei R⁵ ein Triol-Rest eines 3 bis 6 C-Atomen enthaltenden, linearen oder verzweigten dreiwertigen Alkohols und p = 1 bis 10 ist und
   Q und Q' unabhängig voneinander 6 bis 18 C-Atome enthaltende aromatische, aliphatische oder cycloaliphatische Gruppen sind, die sich von Diisocyanaten oder Diisocyanatgemischen ableiten.

Beispiele für geeignete aromatische Polyisocyanate sind:

Alle Isomeren des Toluylendiisocyanats (TDI) entweder in isomerenreiner Form oder als Mischung mehrerer Isomerer, Naphthalin-1,5-Diisocyanat, Diphenylmethan-4,4'-Diisocyanat (MDI), Diphenylmethan-2,4'-Diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyldimethylmethandiisocyanat, Di- und Tetraalkyl-diphenylmethandiisocyanat, 4,4'-Dibenzyldiisocyanat, 1,3-Phenylendiisocyanat, 1,4-Phenylendiisocyanat.

Beispiele für geeignete cycloaliphatische Polyisocyanate sind die Hydrierungsprodukte der vorgenannten aromatischen Diisocyanate wie z.B. das 4,4'-Dicyclohexyl-methan-diisocyanat (H12MDI), 1-Isocyanatomethyl-3-Isocyanato-1,5,5-Trimethyl-cyclohexan (IsophoronDiisocyanat, IPDI), Cyclohexan-1,4-Diisocyanat, hydriertes Xylylen-Diisocyanat (H6XDI), 1-Methyl-2,4-diisocyanato-cyclo-hexan, m- oder p-Tetra-methylxylendiisocyanat (m-TMXDI, p-TMXDI) und Dimerfettsäure-Diisocyanat.

Beispiele für aliphatische Polyisocyanate sind Tetramethoxybutan-1,4-düsocyanat, Butan-1,4-diisocyanat, Hexan-1,6-Diisocyanat (HDI), 1,6-Diisocyanato-2,2,4-Trimethylhexan, 1,6-Düsocyanato-2,4,4-Trimethylhexan, Butan-1,4-Diisocyanat sowie 1,12-Dodecandiisocyanat (C12DI).

Als Epoxidharz-Bausteine für die olefinisch ungesättigten Comonomeren mit mindestens zwei olefinisch ungesättigten Doppelbindungen pro Molekül eignen sich eine Vielzahl von Polyepoxiden, die mindestens 2 1-,2-Epoxigruppen pro Molekül haben. Das EpoxidÄquivalent dieser Polyepoxide kann zwischen 150 und 4000 variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab. Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure. Weitere Epoxide leiten sich von den Epoxidierungsprodukten olefinisch ungesättigter cycloaliphatischer Verbindungen ab.

Konkrete Beispiele für erfindungsgemäß einzusetzende di-, tri- oder polyfunktionelle (Meth)acrylate sind die folgenden Verbindungen:

1,3-Butylenglykoldi(meth)acrylat, 1,4-Butandioldi(meth)acrylat, 1,6-Hexandioldi(meth)-acrylat, Bisphenol-A-Epoxid-Di(meth)acrylat, alkoxyliertes Bisphenol-A-Di(meth)acrylat, Polyalkylenglykoldi(meth)acrylat, Trialkylenglycoldiacrylat, Tetraalkylenglycoldi(meth)-acrylat, Neopentylglycoldi(meth)acrylat, alkoxyliertes Neopentylglykoldi(meth)acrylat, Trialkylolalkantri(meth)acrylat, alkoxyliertes Trialkylolalkantri(meth)acrylat, Glycerinalkoxytri(meth)acrylat, Pentaerythritoltri(meth)acrylat, Tris-(2-hydroxyalkyl)isocyanurat-tri(meth)acrylat, säuregruppenhaltige Tri(meth)acrylatverbindungen, Trimethylol-propan-tri(meth)acrylat, Trisalkoxy-Trimethylolpropantri(meth)acrylat, Ditrimethylol-propan-tetra-(meth)acrylat, Pentaerythritoltetra(meth)acrylat, alkoxyliertes Penta-erythritoltetra-(meth)acrylat, Dipentaerythritolpenta(meth)acrylat, Dipentaerythritol-hexa(meth)acrylat, wobei "alkylen" ethylen, propylen oder butylen und "alkoxy" ethoxy, 1,2- oder 1,3-propoxy oder 1,4-butoxy bedeuten.

Zusätzlich können noch die folgenden (Meth)acrylat-Monomeren mitverwendet werden: Aminmodifizierte Polyetheracrylat-Oligomere, Carboxy-funktionalisierte multifunktionelle (Meth)acrylate, multifunktionelle Melaminacrylate, difunktionelle Siliconacrylate.

Als monofuntionelle Comonomere können die folgenden (Meth)acrylate mit verwendet werden:

Mono-Methacryloyloxyalkyl-succinat, n-/iso-Alkyl(meth)acrylat, Cyclohexyl(meth)acrylat, 4-tert.-Butylcyclohexyl(meth)acrylat, Dihydrodicyclopentadienyl(meth)acrylat, Tetrahydrofurfuryl(meth)acrylat, Isobomyl(meth)acrylat (IBOA), α-Carboxyethyl-(meth)acrylat (α - CEA); Mono(meth)acryloylalkylphthalate, -succinat, -maleinat; 2-(2-Ethoxyethoxy)-ethyl(meth)acrylat, 2-Phenoxyalkyl(meth)acrylat, Alkandiolmono(meth)acrylat, Allyl-(meth)acrylat, Hydroxyalkyl(meth)acrylat, 2,3-Epoxyalkyl(meth)acrylat, N,N-Dialkylaminoalkyl(meth)acrylat, N,N-Dialkyl(meth)acrylamid, Monoalkoxytrialkylen-glycol-(meth)acrylat, Monoalkoxyneopentyl-glycol-alkyloxylat-(meth)acrylat, Polyalkylenglycol(meth)acrylat, alkoxyliertes Nonylphenol(meth)acrylat, wobei die Alkylgruppen 1 bis 12 C-Atome aufweisen können und "alkoxy" ethoxy, 1,2-oder 1,3-propoxy oder 1,4-butoxy bedeuten.

Besonders bevorzugte Beispiele für die Komponente b) sind im Beispielteil angegeben.

Die erfindungsgemäße polymerisierbare Zusammensetzung enthält dabei folgende Gewichtsanteile an den Komponenten a) und b) relativ zur Gesamtzusammensetzung:
i) 1 bis 80 Gew.-%, vorzugsweise 1 bis 40 Gew.-% der Komponente a)
ii) 20 bis 95 Gew.-%, vorzugsweise 40 bis 90 Gew.-% der Komponente b)

Die durch Polymerisation aushärtbare erfindungsgemäße Zusammensetzung kann beispielsweise thermisch oder durch Einwirkung von Gamma- oder Elektronenstrahlung ausgehärtet werden. In diesem Fall ist es nicht erforderlich, dass sie zusätzlich einen PolymerisationsInitiator enthält. Soll das erfindungsgemäße Beschichtungsmittel so ausgestaltet sein, dass es durch Einwirkung von elektromagnetischer Strahlung im sichtbaren oder im UV-Bereich durch Polymerisation ausgehärtet werden kann, enthält es vorzugsweise mindestens einen Initiator zur radikalischen und/oder kationischen Polymerisation als Komponente c). Je nach eingesetzten Initiatoren und Monomeren kann dieser Aushärtungsprozess nach einem radikalischen und/oder kationischen Polymerisations-Prozess ablaufen.

Für den Fall, dass Initiatoren für den Aushärteprozess der polymerisierbaren Zusammensetzung unabdingbar sind, so beträgt der Gewichtsanteil an Initiator in der Gesamtzusammensetzung mit steigender Präferenz mindestens 0,02; 0,05; 0,1; 0,2; 0,5 Gew.-% und mit steigender Präferenz nicht mehr als 10; 8; 5; 2 Gew.-%.

Als Initiatoren für diese radikalische und/oder kationische Polymerisation (Komponente c)) eignen sich beispielsweise die folgenden Initiatoren:

1-Hydroxycyclohexylphenylketon, (5,2,4-Cyclopentadien-1-yl)-[(1,2,3,4,5,6-)-(1-methyl-ethyl)-benzol]eisen(1+)-hexafluoro-phosphat(1-), 2-Benzyldimethylamino-1-(4-morpholinophenyl)-butanon-1, Benzildimethyl-ketal-dimethoxyphenylacetophenon, Bis(5-2,4-cyclopentadien-1-yl)-bis[2,6-difluoro-3-(1H-pyrrol-1-yl)phenyl]-titan, Bis(2,4,6-trimethylbenzoyl)-phenylphosphinoxid (BAPO2), 2-Methyl-1-[4-(methylthio)-phenyl]-2-morpholino-propanon-1, 1-(4-(1-Methylethyl)-phenyl)-2-hydroxy-2-methyl-1-propan-1-on, 2-Hydroxy-2-methyl-1-phenylpropan-1-on, 1,2-Diphenylethan-1,2-dion, 1-[4-(2-Hydroxyethoxy)-phenyl]-2-hydroxy-2-methyl-1-propan-1-on, (2,4,6-Trimethylbenzoyl)-diphenylphosphinoxid, Hydroxybenzylphenylketon, Triarylsulfoniumhexafluoro-antimonatsalze, Triarylsulfonium-hexafluorophosphatsalze, Oligo-(2-hydroxy-2-methyl-1-[4-(1-methylvinyl)phenyl]propanon), 1-Propanon-2-hydroxy-2-methyl-1-[4-(1-methylethenyl)phenyl]-homopolymer, Phosphonsäure-benzoyl-bis(2,6-dimethyl-phenyl)-ester, Benzophenon, Methyl-ortho-benzoylbenzoat, Methylbenzoylformat, 2,2-Diethoxyacetophenon, 2,2-Di-sec-butoxyacetophenon, [4-(4-methylphenylthio)phenyl]-phenyl-methanon-4-benzoyl-4'-methyldiphenylsulfid, p-Phenylbenzophenon, 2-Isopropylthioxanthon, 2-Methylanthrachinon, 2-Ethylanthrachinon, 2-Chloro-anthrachinon, 1,2-Benzanthrachinon, 2-t-Butylanthrachinon, 1,2-Benzo-9,10-anthrachinon, Benzil, Benzoin, Benzoinmethylether, Benzoinethylether, Benzoin-isopropylether, alpha-Methylbenzoin, alpha-Phenylbenzoin, Michler's Keton, Benzophenon, 4,4'-Bis-(diethylamino)benzophenon, Acetophenon, Diethoxyphenylacetophenon, Thioxanthon, Diethylthioxanthon, 1,5-Acetonaphtalin, Ethyl-p-dimethyl-aminobenzoat, Benzilketone, 2,4,6-Trimethylbenzoyldiphenyl-phosphinoxide, Benzilketal-(2,2-dimethoxy-1,2-diphenylethanon), 1-Hydroxycyclohexylphenylketon, 2-Methyl-1 [4-(methylthio)-phenyl]-2-morpholinopropanon-1 und/oder 2-Hydroxy-2-methyl-1-phenyl-propan-1 und/oder deren Mischungen. Diese können gegebenenfalls mit weiteren Radikalinitiatoren vom Peroxid- oder Azotyp und/oder mit aminischen Beschleunigern kombiniert werden.
Wenn vorzugsweise die kationische Polymerisation Verwendung finden soll, können auch Vinylether als Comonomere eingesetzt werden.

Beispiele für derartige Vinylether sind Vinylmethylether, Vinylethylether, Vinylpropyl-ether, Vinylisobutylether, Vinyldodecylether, Vinyloctadecylether, Vinylcyclohexylether, Vinyl-4-hydroxybutylether, Butandiol-1,4-divinylether, 1,4-Cyclohexandimethanol-divinylether, Diethylenglykoldivinylether, Triethylenglykoldivinylether, aber auch die folgenden Vinylverbindungen N-Vinylpyrrolidon, Vinylcaprolactam, 1-Vinylimidazol, Divinylethylenharnstoff.

Konkrete Beispiele für die Komponente c) sind die im Beispielteil genannten Mischungen von Polymerisationsinitiatoren bestehend aus 2-Hydroxy-2-methyl-1-phenyl-propanon mit 1-Hydroxyethylcyclohexyl-phenylketon sowie Bis-(2,4,6-trimethyl-phenyl)-acylphenyl-phosphinoxid oder ein Gemisch von 2,3-Dihydro-6-(2-hydroxy-2-methyl-1-oxopropyl)-1,1,3-trimethyl-3-[4-(2-hydroxy-2-methyl-1-oxopropyl)phenyl]-1H-inden und 2,3-Dihydro-5-(2-hydroxy-2-methyl-1-oxopropyl)-1,1,3-trimethyl-3-[4-(2-hydroxy-2-methyl-1-oxopropyl)phenyl]-1H-inden kommerziell erhältlich unter dem Handelsnamen ESACURE^{®} KIP 100 (Fa. Lamberti Deutschland GmbH).

Um das Umformverhalten und den Korrosionsschutz der ausgehärteten Beschichtung zu verbessern, eignen sich partikuläre anorganische Verbindungen d), die der erfindungsgemäßen polymerisierbaren Zusammensetzung mit einem Gewichtsanteil von 1 bis 20 Gew.-% hinzugegeben werden. Diese partikulären anorganischen Verbindungen d) sind ausgewählt aus Oxiden von Silizium, Titan, Zirkonium, Mangan, Zink, Vanadium, Molybdän und Wolfram, wobei die mittlere Partikelgröße nicht größer sein sollte als 5 µm, vorzugsweise nicht größer als 1 µm und insbesondere nicht größer als 0,1 µm.

In einer speziellen Ausführungsform enthält die polymerisierbare Zusammensetzung zusätzlich Verbindungen der Gruppe e), die sowohl eine Polyether-Kette aus mindestens 5 Ethylenoxid und/oder Propylenoxid-Einheiten als auch mindestens eine Carboxyl- oder Estergruppe mit mindestens einer polymerisierbaren Doppelbindung aufweisen und sich von der Komponente a) unterscheiden. Diese verleihen der durch Polymerisation ausgehärteten Zusammensetzung antiadhäsive Eigenschaften gegenüber Mikroorganismen. Art und Menge der Komponente e) muss dabei so gewählt werden, dass einerseits eine ausreichende antiadhäsive Wirkung gegenüber Mikroorganismen erzielt wird und dass andererseits die ausgehärtete Beschichtung die erforderliche Korrosionsschutz-Wirkung aufweist. Dies ist in der Regel dann gegeben, wenn die Verbindung der Gruppe e) eine Molmasse im Bereich von 250 bis 2500, vorzugsweise im Bereich von 300 bis 650 aufweist. Dabei handelt es sich um Verbindungen mit einer Polyethylenglykol- und/oder Polypropylenglykolkette aus mindestens 5 derartigen Einheiten, bei der an einem oder beiden Kettenenden ein Carbonsäure-Rest mit mindestens einer polymerisierbaren Doppelbindung sitzt. Im Allgemeinen wird der Carbonsäure-Rest durch eine Esterbindung mit der Polyether-Kette verbunden sein. Konkrete Beispiele für Verbindungen der Gruppe e) mit antiadhäsiven Eigenschaften können der noch unveröffentlichten deutschen Anmeldung DE 102005045441.0 (WO.A.2007/1033736) entnommen werden, auf deren Inhalt bezüglich dieser Gruppe von Verbindungen hiermit ausdrücklich verwiesen wird.
Verbindungen der Gruppe e), die sich von Verbindungen der Gruppe a) unterscheiden, sind in der erfindungsgemäßen Anwendungslösung mit einem Gewichtsanteil von 0,01 bis 20 Gew.-% enthalten.

Dem Fachmann ist geläufig, dass die vorstehend genannten Komponenten a) bis e), insbesondere die Metallkomplex-Verbindungen a), Reaktionen miteinander eingehen können und als technische Produkte Verunreinigungen enthalten können, so dass sie in der Behandlungszusammensetzung in der Form vorliegen, die unter den genannten Bedingungen dem thermodynamischen Gleichgewicht entsprechen, sofern sich dieses bereits eingestellt hat. In diesem Sinne sind die Tabellen im Beispielteil zu verstehen. Diese geben an, welche Rohstoffe in welchen Mengen zur Herstellung der erfindungsgemäßen Zusammensetzung verwendet wurden. Dabei ist zu erwarten, dass einzelne Komponenten beim Vermischen der Rohstoffe miteinander reagieren.

Beispielsweise können sich aus Alkoholen und Carbonsäuren Ester bilden. Erwünschtenfalls kann eine derartige Reaktion durch Erwärmen der Mischung während der Herstellung herbeigeführt werden. Dies gilt insbesondere für die eingesetzte Metallkomplex-Verbindung a), welche beispielsweise γ-n Alkoholat-Gruppen tragen kann. Das Alkoholat wird zumindest teilweise mit weiteren Komponenten der Mischung unter Abspaltung des Alkohols reagieren. Der abgespaltene Alkohol kann im Produkt verbleiben, wobei er dessen Viskosität reduziert. Der entstehende Alkohol kann jedoch auch durch Erwärmen und/oder Evakuieren abgezogen werden, falls man Wert darauf legt, dass beim Aushärten der Beschichtung möglichst wenig Lösungsmittel verdampfen muss.

Weiterhin ist dem Fachmann bekannt, dass bei der Alkoxylierung von Alkoholen oder Carbonsäuren, die einen charakteristischen Syntheseschritt für spezielle Ausführungsformen der Metallkomplex-Verbindung a) darstellt, stets Produktgemische aus Molekülen mit unterschiedlichem Alkoxylierungsgrad entstehen.

Die vorstehend genannten Komponenten a) bis e) stellen die Hauptmenge des erfindungsgemäßen Mittels dar, d. h. ihre Anteile addieren sich vorzugsweise zu mindestens 50 Gew.-%, besonders bevorzugt zu mindestens 80 Gew.-% und insbesondere zu mindestens 90 Gew.-%, wobei der Gewichtsanteil zusätzlicher Komponenten vorzugsweise kleiner als 50 Gew.-%, besonders bevorzugt kleiner als 20 Gew.-% und insbesondere kleiner als 10 Gew.-% ist.

Das erfindungsgemäße Mittel enthält dabei vorzugsweise nicht mehr als 30 Gew.-%, besonders bevorzugt nicht mehr als 10 Gew.-% und insbesondere nicht mehr als 5 Gew.-% weitere Bestandteile oder Komponenten wie zum Beispiel Haftvermittler, insbesondere Silane oder Alkoxysilane, sowie deren Hydrolyse- und Kondensationsprodukte, oder Korrosionsinhibitoren, insbesondere organische Phosphonate und Phosphate, oder organische Biozide, wie aldehydische Wirkstoffe, quaternäre Ammoniumverbindungen und Isothiazolon-Verbindungen, oder anorganische Füllstoffe wie Sulfate oder Silikate, insbesondere Phyllosilikate, insofern diese nicht unter die Definition der zuvor benannten partikulären anorganischen Verbindungen - Komponente d) - fallen, oder weitere Hilfsstoffe wie modifiziertes Polyethylenwachs.

Unabhängig davon, ob die erfindungsgemäße polymerisierbare Zusammensetzung zusätzlich solche Haftvermittler, Korrosionsschutzmittel, Biozide oder Füllstoffe enthält, ist es weiterhin bevorzugt, dass die Zusammensetzung nicht mehr als 10 Gew.-%, vorzugsweise nicht mehr als 5 Gew.-% an Komponenten enthält, die beim Aushärten durch Polymerisation nicht in die entstehende Schicht eingebaut werden und die als Reinkomponente einen Siedepunkt von höchstens 250 °C bei Normaldruck besitzen. Derartige Komponenten fallen in Ihrer Reinform unter die Begriffsbestimmung von flüchtigen organischen Verbindungen (VOC) gemäß der EU Richtlinie 2004/42/EC. Dabei gelten Komponenten als in die entstandene Schicht eingebaut, die chemisch also kovalent oder ionisch in der Schichtmatrix gebunden sind.

Des Weiteren ist es bevorzugt, dass die Zusammensetzung nicht mehr als 2 Gew.-% an solchen beim Aushärten flüchtigen Komponenten enthält. Derartige flüchtige Komponenten können entweder durch den Herstellungsprozess der Komponente a) oder durch das Herstellen der erfindungsgemäßen Zusammensetzung durch Reaktion der Komponente a) mit der Komponente b) freigesetzt werden und so in die Zusammensetzung gelangen. Dies ist beispielsweise der Fall, wenn die Komponente a) aus dem Alkoholat oder dem Acetylacetonat eines der genannten Metalle dargestellt wird. Übersteigt der auf diese Weise hervorgerufene Gehalt der Zusammensetzung an flüchtigen Komponenten die erwünschten Obergrenzen, so kann dieser durch geeignete technische Maßnahmen wie beispielsweise Erwärmen und/oder Evakuieren auf die bevorzugte Höchstmenge vermindert werden.

In einem zweiten Aspekt betrifft die vorliegende Erfindung ein Verfahren zur korrosionsschützenden und lackhaftungsverbessernden Beschichtung von metallischen Oberflächen bzw. Metallband, **dadurch gekennzeichnet, dass** die folgenden Prozessschritte nachfolgend durchgeführt werden:
(i) in Kontakt bringen der erfindungsgemäßen Zusammensetzung mit der metallischen Oberfläche bei einer Prozesstemperatur von mindestens 15 C, vorzugsweise mindestens 30 °C, aber nicht bei einer höheren Prozesstemperatur als 80 °C, vorzugsweise nicht höher als bei 60 °C;
(ii)gegebenenfalls Entfernen der überschüssigen Menge der erfindungsgemäßen Zusammensetzung von der metallischen Oberfläche;
(iii)Aushärten des auf der metallischen Oberfläche befindlichen Films der erfindungsgemäßen Zusammensetzung mittels thermischer Verfahren oder hochenergetischer Bestrahlung, vorzugsweise durch Elektronenstrahlung oder UV-Bestrahlung, innerhalb von mindestens 10⁻⁵ Sekunden und nicht mehr als 10 Sekunden.

Bei diesem Verfahren wird die erfindungsgemäße Zusammensetzung in an sich bekannter Weise durch Walzenapplikation (Chem-Coating), Abstreifen, Filmziehen (Curtain-flow-Verfahren), Tauchen/Abquetschen oder Spritzen/Abquetschen auf die metallische Oberfläche aufgebracht. Bevorzugt geschieht dies im Coil-Coating-Verfahren von Metallbändern. Erfolgt die erfindungsgemäße Behandlung unmittelbar nach einer metallischen Oberflächeveredlung, z.B. einer elektrolytischen Verzinkung oder einer Schmelztauchverzinkung von Stahlbändern, so können die Bänder ohne vorherige Reinigung mit der erfindungsgemäßen Behandlungslösung bzw.- dispersion in Kontakt gebracht werden. Wurden die zu behandelnden Metallbänder vor der erfindungsgemäßen Beschichtung jedoch gelagert und/oder transportiert, so sind sie in der Regel mit Korrosionsschutzölen versehen oder zumindest so weitgehend verschmutzt, dass eine Reinigung vor der erfindungsgemäßen Beschichtung erforderlich ist. Dies kann mit gebräuchlichen schwach bis stark alkalischen Reinigern, bei Aluminium und seinen Legierungen auch mit sauren Reinigern erfolgen.

Vorzugsweise werden die erfindungsgemäßen Zusammensetzungen durch ultraviolette (UV) Strahlung oder durch Elektronenstrahlung gehärtet bzw. vernetzt. Geeignete UV-Strahlung hat Wellenlängen zwischen 200 und 800 nm, vorzugsweise zwischen 250 und 450 nm. Die Strahlungsintensität richtet sich dabei nach der gewünschten Applikationsgeschwindigkeit, dem Initiatorsystem und der Comonomer-Zusammensetzung und kann durch den Fachmann leicht bestimmt werden.

Für die alternativ zu verwendende Elektronenstrahlung kann jede konventionelle Elektronenstrahlquelle eingesetzt werden. Beispielhaft genannt seien Beschleuniger vom Typ des van de Graaff-Generators, Linearbeschleunigers, Resonanztransformators, oder Dynatrons. Die Elektronenstrahlung hat dabei eine Energie von 50 bis 1000 keV, vorzugsweise zwischen 100 und 300 keV, die resultierende Strahlendosis liegt zwischen 0,1 und 100 Mrad.

Weiterhin kann die Aushärtung der auf die Metalloberfläche aufgebrachten Zusammensetzung durch Zufuhr thermischer Energie initialisiert werden. Das thermische Aushärten kann über gängige Heiztechniken mittels Öfen, aber unter anderem auch laserinduziert, über Mikrowellen- oder IR-Bestrahlung erfolgen.

Mittels des erfindungsgemäßen Verfahrens werden ausgehärtete Beschichtungen mit einem Schichtgewicht von mindestens 0,5 g/m², vorzugsweise mindestens 2 g/m², aber nicht mehr als 25 g/m² und vorzugsweise nicht mehr als 8 g/m² erzeugt.

Das erfindungsgemäße Beschichtungsverfahren stellt vorzugsweise die einzige Maßnahme zur Korrosionsschutzbehandlung der Metalloberfläche dar. Es ist also nicht erforderlich, dass die Metallband-Oberfläche vor dem Aufbringen des erfindungsgemäßen Beschichtungsmittels einer anderen Korrosionsschutz-Behandlung unterzogen wird. Das erfindungsgemäße Beschichtungsmittel kann also unmittelbar auf die frisch erzeugte oder gereinigte Metallband-Oberfläche aufgetragen werden. Weiterhin ist es bevorzugt, dass die Beschichtung der Metallband-Oberfläche mit der erfindungsgemäßen Zusammensetzung die einzige Beschichtung überhaupt darstellt. Es können jedoch zusätzlich zur erfindungsgemäßen Beschichtung weitere Lackschichten appliziert werden.

Mit der erfindungsgemäßen Zusammensetzung bzw. dem erfindungsgemäßen Beschichtungsverfahren können insbesondere metallische Oberflächen behandelt werden, die ausgewählt sind aus Zink, Stahl, verzinktem oder legierungsverzinktem Stahl, Edelstahl oder aus Aluminium und seinen Legierungen.

Schließlich betrifft die Erfindung ein beschichtetes Metallband oder ein hieraus abgeteiltes Metallblech, das gegebenenfalls umgeformt sein kann, das eine Beschichtung aufweist, die nach dem vorstehend beschriebenen Verfahren erhältlich ist.

Letztendlich umfasst die Erfindung auch die Verwendung eines Substrates, das entsprechend den zuvor genannten Verfahren mit der erfindungsgemäßen Zusammensetzung beschichtet wurde, für die Herstellung von "Weißer Ware", Automobilkarosserien, Gehäusen elektronischer Bauteile und für das Baugewerbe und den Transportsektor.

### Ausführungsbeispiele

Zur Bereitstellung einer erfindungsgemäßen polymerisierbaren Zusammensetzung wird die Einzelkomponente a) oder die für die Herstellung von Einzelkomponente a) benötigten Precursor mit Komponente b) und gegebenenfalls mit weiteren Komponenten, unter anderen den Komponenten c) bis e) vermischt. Werden die Precursor der Einzelkomponente a) für die Bereitstellung der erfindungsgemäßen Zusammensetzung eingesetzt, wird das Gemisch bei erhöhter Temperatur für einige Zeit gerührt, so dass die Komponenten untereinander abreagieren können. Eine derartige erfindungsgemäße Mischung kann sodann als Beschichtungsmittel unmittelbar oder nach dem Entfernen flüchtiger, niedermolekularer Verbindungen, die bei der Reaktion der Einzelkomponenten und insbesondere bei der Reaktion der Precursor der Einzelkomponente a) untereinander entstehen, eingesetzt werden. Alternativ wird zur Herstellung der erfindungsgemäßen polymerisierbaren Metallkomplexe a) lediglich eine Mischung der benötigten Precursor unter Rühren erhitzt und zu dieser nach dem Abkühlen und gegebenenfalls nach dem Entfernen flüchtiger, niedermolekularer Verbindungen bei erniedrigtem Druck Komponente b) und zusätzlich weitere Komponenten, unter anderen die Komponenten c) bis e) gegeben. Typische Precursor für die Komponente a) können in drei Gruppen unterteilt werden, wobei die erste Gruppe von Metallverbindungen der Metalle Silizium, Titan, Zirkon, Mangan, Zink, Vanadium, Molybdän und/oder Wolfram mit beispielsweise Alkoholaten, wie Iso-Propoxylat, oder Acetylacetonat gestellt wird. Üblicherweise wird als Metallverbindung Ti(lsopropoxylat)₄ als Precursor für die erfindungsgemäße Komponente a) eingesetzt. Die zweite Precursor-Gruppe beinhaltet die einfach und mehrfach alkoxylierten ungesättigten Carbonsäuren wie beispielsweise drei- und vierfach ethoxylierte (EO3MA; EO4MA) oder dreifach propoxylierte Methacrylsäure (PO3MA). Als dritter Precursor für die erfindungsgemäße Komponente a) werden beispielsweise Dicarbonsäuren, sowie deren Anhydride, oder Hydroxycarbonsäuren und Hydroxycarbonsäureamide, sowie deren innere Ester, verwendet, die über Kondensationsreaktionen einerseits mit dem Metallkomplex und anderseits mit den alkoxylierten ungesättigten Carbonsäuren reagieren und Addukte entsprechend der Strukturformel (I) bilden. Vorzugsweise wird Bernsteinsäureanhydrid (BSA) als Vertreter dieser Precursor-Gruppe verwendet. Die Bildung der Komponente a) kann dabei über die Bestimmung der Säurezahl nach DIN 53402 verfolgt werden.

Die in diesem Beispiel synthetisierte erfindungsgemäße Komponente a) gemäß der Strukturformel (I) geht aus einem Gemisch von Ti(Isopropoxylat)₄, Bernsteinsäure-anhydrid (BSA) und dreifach propoxylierter Methacrylsäure (PO3MA) hervor, im Folgenden als PO3MA-BSA-Ti bezeichnet.
In der Tabelle 2 sind die beispielhaften erfindungsgemäßen Komponenten a) (B1-B3) und ein für das Vergleichsbeispiel (V1) verwendeter polymerisierbarer Metallkomplex entsprechend der Nomenklatur der allgemeinen Strukturformel (I) aufgelistet. Die Bezeichnung der polymerisierbaren Metallkomplexe erfolgt dabei entsprechend der Nomenklatur der einzelnen Precursor-Gruppen wie zuvor erläutert.

| Tabelle 1: | | |
|---|---|---|
| Verbindung / Produkt | Komponente | Anteil / Gew.-% |
| PO3MA-BSA-Ti | Komponente a) | 35,0 |
| Acrylharz (50-75%) Acryliertes Monomer (25-50%) | Komponente b) | 35,6 |
| Dreifach acrylierter Säurester | | 2,5 |
| 2-Hydroxy-2-Methyl-1-Phenyl-Propan-1-on (30%) Oligo-[2-Hydroxy-2-Methyl-1-[4-(1Methylvinyl)-Phenyl]-Propanon] (70%) | Komponente c) | 4,3 |
| ZnO (feinteilig; < 30 nm Partikelgröße) | Komponente d) | 13,3 |
| BaSO₄ | Pigment | 6,7 |
| PTFE modifiziertes Polyethylenwachs | Hilfsstoff | 2,6 |

Die Rezeptur der Tabelle 1 stellt zugleich eine Basisrezeptur für die erfindungsgemäßen Beispiele (B1-B3, Tabelle 2) dar, wobei jeweils verschiedene Komponenten a) mit einem Gewichtsanteil von 35 Gew.-% eingesetzt werden.

| Tabelle 2: | | | | |
|---|---|---|---|---|
| Beispiel | Bezeichnung | Strukturformel (I)^{#} | | |
| | | X | Y | Z^{b} |
| V1 | HEMA-BSA-Ti | -CH-(CH₃)₂ | -O-(CH₂)₂- | -(CH₂)₂- |
| B1 | E03MA-BSA-Ti | -CH-(CH₃)₂ | -[O-(CH₂)₂]₃- | -(CH₂)₂- |
| B2 | EO4MA-BSA-Ti | -CH-(CH₃)₂ | -[O-(CH₂)₂]₄- | -(CH₂)₂- |
| B3 | PO3MA-BSA-Ti | -CH-(CH₃)₂ | -[O-CH(CH₃)(CH₂)]₃- | -(CH₂)₂- |
| # mit R¹-R² : H; R³ : -CH₃; Z : O-C(=O)-Z^{b}-C(=O)-O und n ≥ 1; = 4 | | | | |

Als Substrat für die Beschichtungen dienten Bleche aus schmelztauchbeschichtetem Stahl (HDG). Diese wurden zunächst mit einem kommerziellen Reiniger (Ridoline^{®} 1340, Henkel KGaA) gereinigt. Um ein dem technischen Coil-Coating Prozess möglichst ähnliches Auftragsverfahren bereitzustellen, wurden die polymerisierbaren Zusammensetzungen mit einem Gerät zum Aufbringen von Druckfarben appliziert.
(PASTE INK PROOFER, R K Print Coat Instruments Ltd., United Kingdom). Jeweils 2-3 g der Zusammensetzungen, die beim Zusammenmischen der Komponenten gemäß der Tabelle 2 erhalten wurden, wurden auf eine Gummiwalze aufgetragen und mittels einer lasergravierten Stahlwalze gleichmäßig auf dieser verteilt. Nach definierter Zeit wird der Materialüberschuss mit einem Rakelmesser von der Auftragswalze entfernt. Unmittelbar danach kann die auf der Auftragswalze verbleibende Schicht der polymerisierbaren Zusammensetzung auf ein Zinkblech (HDG) analog zum Coil-Coating Verfahren übertragen werden. Die Schichtdicke kann dabei über die Härte der Gummierung der Auftragswalze und die Viskosität des Produktes eingestellt werden. Der so auf das Zinkblech aufgetragene Film der Zusammensetzungen (V1, B1-B3) wurde jeweils 2-mal bei einer simulierten Bandgeschwindigkeit von 15 m/min mit UV-Strahlung (Hg-Dampflampe: P_{hν} = 240 W/cm²) ausgehärtet, wobei die effektive Bestrahlungsdauer bei ca. 4 ms liegt. Die Schichtdicke der ausgehärteten Zusammensetzung gemäß Tabelle 2 betrug für alle die Titanverbindungen V1 und B1-B3 enthaltenden Schichten 5 µm.

Die wie zuvor beschrieben beschichteten Bleche wurden in Korrosionstests, Umbiegetests und bezüglich der chemischen Beständigkeit des Lackes gegenüber Lösemitteln getestet. Tabelle 3 beinhaltet eine Zusammenfassung der Testergebnisse der jeweiligen erfindungsgemäßen Beschichtung (B1-B3) und der Vergleichsbeschichtung (V1).
Die Vergleichsbeschichtung (V1) bezieht sich auf eine polymerisierbare Zusammensetzung enthaltend das Umsetzungsprodukt von Titan-Isopropoxylat mit Bernsteinsäure-anhydrid (BSA) und Hydroxyethylmethacrylat (HEMA) entsprechend der noch unveröffentlichten Anmeldung DE 102005045441.0 (WO.A.2007/033736).
Die experimentellen Daten zeigen, dass die erfindungsgemäßen Beispiele B1 und B2 bezüglich der korrosiven Lackunterwanderung im Salzsprühnebeltest weniger gute Resultate liefern als die Vergleichsbeschichtung. Insbesondere die Unterwanderungswerte am Ritz sind deutlich höher als für eine Beschichtung gemäß V1. Bezüglich des Umformverhaltens und der chemischen Beständigkeit des Lacksystems hingegen sind signifikante Unterschiede nicht vorhanden und lediglich das 4-fach ethoxylierte Methacrylat (B2) schneidet im 0-T Bend-Test schlechter ab als die Beschichtungen gemäß V1 und B1. Die erfindungsgemäßen 3-fach propoxylierten Methacrylate (B3) belegen eine im Vergleich zu sämtlichen anderen Beschichtungen mindestens gleich gute Performance in den verschiedenen Testverfahren. Insbesondere die korrosive Unterwanderung am Ritz ist für diese die Verbindung PO3MA-BSA-Ti enthaltende ausgehärtete Beschichtung relativ zur Vergleichbeschichtung (V1) deutlich unterdrückt. Die chemische Beständigkeit liegt dabei nur marginal unterhalb eines Durchhärtungsgrades von 100.
Ein weiterer Aspekt dieser Erfindung zeigt sich aufgrund der Anwesenheit des partikulären ZnO in der polymerisierbaren Zusammensetzung im Vergleich des Umformverhaltens der ausgehärteten Zusammensetzungen von V1 mit V1* und B3 mit B3*. Die Vergleiche belegen, dass partikuläres ZnO in der ausgehärteten Schicht das Umformverhalten, also die Schichtadhäsion deutlich verbessert.

| Tabelle 3 | | | | | | |
|---|---|---|---|---|---|---|
| Beispiel | Komponente a) | SST-Lackunterwanderung ^{%} | | | Biegeversuch ^{#} | Chemische Beständigkeit ^{†} |
| | | Stunden / h | Ritz / mm | Kante / mm | Skala von 0-5 | DH |
| V1* | HEMA-BSA-Ti | 360 | 2,2 | 3 | 3 | 100 |
| V1 | HEMA-BSA-Ti | 240 | 1,1 | 2,4 | 2 | 100 |
| | | 360 | 2,0 | 3,7 | | |
| B1 | EO3MA-BSA-Ti | 240 | 2,9 | 3,3 | 2 | 100 |
| | | 360 | 4,2 | 4,6 | | |
| B2 | EO4MA-BSA-Ti | 240 | 2,6 | 3,4 | 3 | 100 |
| | | 360 | 4,2 | 4,8 | | |
| B3 | PO3MA-BSA-Ti | 240 | 0,5 | 2,9 | 1 | 95 |
| | | 360 | 1,4 | 4,0 | | |

| | | | | | | |
|---|---|---|---|---|---|---|
| V1*: Zusammensetzung gemäß Tabelle 1 jedoch ohne partikuläres Pigment ZnO bei entsprechend größerem Anteil der übrigen Komponenten SST: Salzsprühnebeltest % Unterwanderung nach DIN 53 167 # 0-T Bend-Test nach ECCA-Norm T7 † MEK (Methylethylketon)-Test nach DIN EN 13 523-11 DH: Durchhärtung | | | | | | |

## Patentansprüche

1. Eine polymerisierbare Zusammensetzung zur korrosionsschützenden Beschichtung metallischer Oberflächen enthaltend:
a) mindestens eine Verbindung gemäß der folgenden allgemeinen Formel (I): 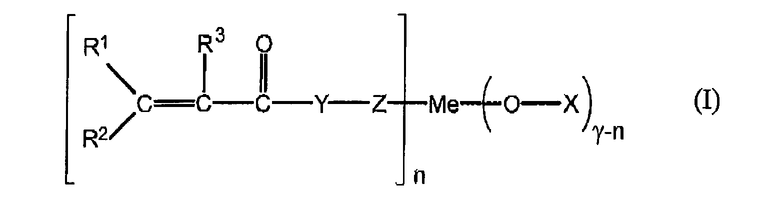 worin:
- R¹ und R² jeweils unabhängig voneinander ausgewählt sind aus Wasserstoff, C₁-C₁₂-Alkyl-, Arylalkyl-Gruppen oder aus der Gruppe -CO-O-W und Wein Wasserstoff-Atom, eine C₁-C₁₂ Alkyl-Gruppe oder Me ist;
- R³ einem Wasserstoff-Atom oder einer C₁-C₁₂ Alkyl-Gruppe entspricht;
- Me ein Metallatom mit der Oxidationsstufe γ darstellt, welches ausgewählt ist aus der Gruppe bestehend aus Silizium, Titan, Zirkon, Mangan, Zink, Vanadium, Molybdän und Wolfram;
- X ein Wasserstoff-Atom, eine C₁-C₁₂ Alkyl-, eine Aryl- oder eine Aralkyl-Gruppe, eine Alkoxyl- oder Aroxyl-Gruppe darstellt oder 2(-O-X) Acetylacetonat entspricht;
- n = 1 bis γ-1 ist und γ die Oxidationsstufe des Metalls Me bezeichnet;
- Y eine Alkoxyl- oder Polyalkoxyl-Gruppe gemäß der folgenden allgemeinen Formel (II) darstellt,: 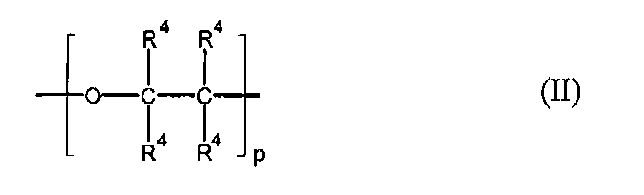 wobei die Gruppe Y über die Oxo-Funktion an den Teil der Verbindung (I) gebunden ist, der die olefinische Doppelbindung trägt;
die Reste R⁴ jeweils unabhängig voneinander ein Wasserstoff-Atom oder eine lineare Alkyl-Gruppe mit nicht mehr als 6 C-Atomen darstellen; und
p mindestens 1 aber nicht größer als 10 ist und für den Fall, dass p gleich 1 ist, mindestens ein Rest R⁴ nicht ein Wasserstoff-Atom darstellt; und
- die Gruppe Z ausgewählt ist aus:
O, NH, S, O-C(=O)-Z^{b}-O, O-C(=O)-Z^{b}-NH, O-C(=O)-Z^{b}-s, O-C(=O)-Z^{b}-C(=O)-O. O-C(=O)-Z^{b}-P(=O)-O, O-C(=O)-Z^{b}-P(=O)₂=O, O-C(=O)-Z^{b}-O-P(=O)-O oder O-C(=O)-Z^{b}-O-P(=O)₂-O,
wobei Z^{b} eine organische Gruppe darstellt und die Carboxylgruppe -O-C(=O)- an die Gruppe Y gebunden ist; und
b) zusätzlich zur Komponente a) mindestens ein Comonomer oder Cooligomer, das mindestens eine Carboxyl- oder eine Ester-Gruppe und mindestens eine olefinische Doppelbindung aufweist.

2. Polymerisierbare Zusammensetzung gemäß Anspruch 1, **dadurch gekennzeichnet, dass** die organische Gruppe Z^{b} ausgewählt ist aus:
- einer linearen oder verzweigten Alkyl-Gruppe,
- einer linearen oder verzweigten Alkylen-Gruppe mit olefinischen Doppelbindungen,
- einer Gruppe vom Typ -(CH₂)ₓ-C₆H₄-(CH₂)_{y}-, wobei x und y jeweils unabhängig voneinander ganze Zahlen von 0 bis 4.

3. Polymerisierbare Zusammensetzung gemäß einem oder mehreren der vorherigen Ansprüche, **dadurch gekennzeichnet, dass** gemäß der allgemeinen Formel (I) der Komponente a) mindestens ein organischer Rest R¹, R² und R³ jeweils unabhängig voneinander ausgewählt ist aus H, CH₃, C₂H₅, C₃H₇ und C₄H₈.

4. Polymerisierbare Zusammensetzung gemäß einem oder mehreren der vorherigen Ansprüche, **dadurch gekennzeichnet, dass** die Gruppe Y der Komponente a) auf Oxiran, 2-Methyl-Oxiran, 2,3-Dimethyloxiran und 2-Ethyl-Oxiran basiert, wobei die Anzahl p der konstituierenden Einheiten von Y nicht größer als 6. aber mindestens gleich 1.

5. Polymerisierbare Zusammensetzung gemäß einem oder mehreren der vorherigen Ansprüche, **dadurch gekennzeichnet, dass** als Komponente b) Comonomere oder Cooligomere verwendet werden, die ausgewählt sind aus Acrylsäure, Methacrylsäure, Crotonsäure, Vinylessigsäure, Maleinsäure, Fumarsäure und aus Monomeren oder Oligomeren, die mindestens eine derartige Säuregruppe aufweisen, wobei die Carbonsäuregruppen vollständig oder teilweise verestert sein können.

6. Polymerisierbare Zusammensetzung gemäß einem oder mehreren der vorherigen Ansprüche, **dadurch gekennzeichnet, dass** als Komponente b) Comonomere oder Cooligomere verwendet werden, die ausgewählt sind aus aromatischen oder aliphatischen Urethan-Acrylat- oder Urethan-Methacrylat-Oligomeren sowie Addukten oder Copolymeren von Acrylsäure oder Methacrylsäure oder Hydroxyalkyl-Derivaten hiervon mit ungesättigten Dicarbonsäuren oder mit Anhydriden mehrbasischer Carbonsäuren oder Derivaten hiervon.

7. Polymerisierbare Zusammensetzung gemäß einem oder mehreren der vorherigen Ansprüche, **dadurch gekennzeichnet, dass** die Komponenten a) und b) in folgenden Gewichtsanteilen relativ zur Gesamtzusammensetzung enthalten sind:
i) 1 bis 80 Gew.-% der Komponente a)
ii) 20 bis 95 Gew.-% der Komponente b)

8. Polymerisierbare Zusammensetzung gemäß Anspruch 7, **dadurch gekennzeichnet, dass** sie als zusätzliche Komponente c) mindestens einen Initiator zur mindestens freien radikalischen und/oder kationischen Polymerisation enthält, wobei der Gewichtsanteil an Initiator in der Gesamtzusammensetzung mindestens 0,02 Gew.-% und höchstens 10 Gew.-% beträgt.

9. Polymerisierbare Zusammensetzung gemäß einem oder beiden der Ansprüche 7 und 8, **dadurch gekennzeichnet, dass** die Zusammensetzung relativ zur Gesamtzusammensetzung zusätzlich 1 bis 20 Gew.-% einer Komponente d) enthält, die ein partikuläres anorganisches Oxid ausgewählt aus Oxiden von Silizium, Titan, Zirkonium, Mangan, Zink, Vanadium, Molybdän und Wolfram mit einer mittleren Partikelgröße von nicht mehr als 5 µm, darstellt.

10. Polymerisierbare Zusammensetzung gemäß einem oder mehreren der Ansprüche 7 bis 9, **dadurch gekennzeichnet, dass** die Zusammensetzung relativ zur Gesamtzusammensetzung zusätzlich 0,01 bis 20 Gew.-% einer organischen Komponente e) enthält, die sowohl eine Polyether-Kette aus mindestens 5 Ethylenoxid- und/oder Propylenoxid-Einheiten als auch mindestens eine Carboxyl- oder Estergruppe mit mindestens einer polymerisierbaren Doppelbindung aufweist und sich von der Komponente a) unterscheidet.

11. Polymerisierbare Zusammensetzung gemäß einem oder mehreren der Ansprüche 7 bis 10, **dadurch gekennzeichnet, dass** die Gewichtsanteile der Komponenten a) bis e) sich addieren zu mindestens 50 Gew.-%, wobei der Gewichtsanteil zusätzlicher Komponenten kleiner ist als 50 Gew.-%.

12. Polymerisierbare Zusammensetzung gemäß einem oder mehreren der vorherigen Ansprüche, **dadurch gekennzeichnet, dass** die Zusammensetzung nicht mehr als 10 Gew.-% an Komponenten enthält, die beim Aushärten durch Polymerisation nicht in die entstehende Schicht eingebaut werden und die als Reinkomponente einen Siedepunkt von höchstens 250 °C bei Normaldruck besitzen.

13. Ein Verfahren zur korrosionsschützenden und lackhaftungsmittelnden Beschichtung einer metallischen Oberfläche, **dadurch gekennzeichnet, dass** die folgenden Prozessschritte nachfolgend durchgeführt werden:
(i) in Kontakt bringen einer polymerisierbaren Zusammensetzung gemäß einem oder mehreren der vorherigen Ansprüche mit der metallischen Oberfläche bei einer Prozesstemperatur von mindestens 15 °C, , aber nicht bei einer höheren Prozesstemperatur als 80 °C;
(ii)gegebenenfalls Entfernen der überschüssigen Menge der polymerisierbaren Zusammensetzung von der metallischen Oberfläche;
(iii)Aushärten des auf der metallischen Oberfläche befindlichen Films der polymerisierbaren Zusammensetzung mittels thermischer Verfahren oder hochenergetischer Bestrahlung innerhalb von mindestens 10⁻⁵ Sekunden und nicht mehr als 10 Sekunden.

14. Verfahren gemäß Anspruch 13, **dadurch gekennzeichnet, dass** die beschichtete metallische Oberfläche ausgewählt ist aus einer Oberfläche von Stahl, Zink, verzinktem oder legierungsverzinktem Stahl, Edelstahl und/oder einer Oberfläche von Aluminium und seinen Legierungen.

## Claims

1. Polymerisable composition for corrosion protective coating of metallic surfaces comprising:
a) at least one compound according to the following general Formula (I): 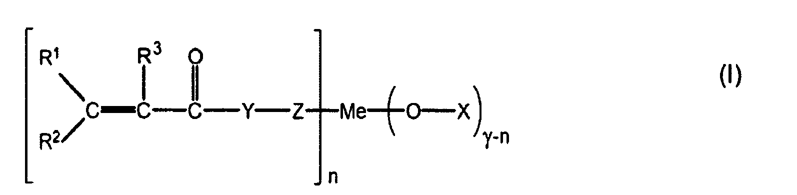 in which:
- R¹ and R² each independently of one another are selected from hydrogen, C₁-C₁₂ alkyl groups, arylalkyl groups or from the group -CO-O-W and W is a hydrogen atom, a C₁-C₁₂ alkyl group or Me;
- R³ corresponds to a hydrogen atom or a C₁-C₁₂ alkyl group;
- Me represents a metal atom in the oxidation state γ, selected from the group consisting of silicon, titanium, zirconium, manganese, zinc, vanadium, molybdenum and tungsten;
- X represents a hydrogen atom, a C₁-C₁₂ alkyl-, an aryl- or an aralkyl group, an alkoxy- or aryloxy group or 2(-O-X) corresponds to acetylacetonate;
- n is = 1 to γ-1 and γ designates the oxidation state of the metal Me;
- Y represents an alkoxy or polyalkoxy group according to the following
general Formula (II): 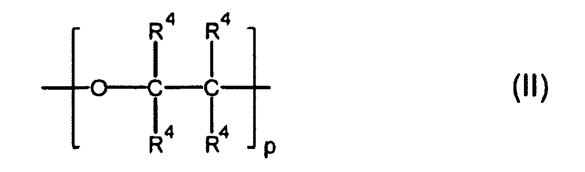 wherein the group Y is bonded through the oxo function to the part of the compound (I) that carries the olefinic double bond;
the groups R⁴ each independently of one another represent a hydrogen atom or a linear alkyl group containing not more than 6 carbon atoms; and
p is at least 1 but not greater than 10 and for the case where p is equal to 1, at least one R⁴ group does not represent a hydrogen atom; and
- the group Z is selected from:
O, NH, S, O-C(=O)-Z^{b}-O, O-C(=O)-Z^{b}-NH, O-C(=O)-Z^{b}-S, O-C(=O)-Z^{b}-C(=O)-O, O-C(=O)-Z^{b}-P(=O)-O, O-C(=O)-Z^{b}-P(=O)₂-O, O-C(=O)-_{Z}^{b}-OP(=O)-O or O-C(=O)-Z^{b}-O-P(=O)₂-O,
wherein Z^{b} represents an organic group and the carboxyl group -O-C(=O)- is bonded to the group Y; and
b) in addition to component a) at least one comonomer or cooligomer, which exhibits at least one carboxyl or an ester group and at least one olefinic double bond.

2. Polymerisable composition according to claim 1, **characterised in that** the organic group Z^{b} is selected from:
- a linear or branched alkyl group,
- a linear or branched alkylene group containing olefinic double bonds,
- a group of the type -(CH₂)ₓ-C₆H₄-(CH₂)_{y}-, wherein x and y each independently of one another are integers from 0 to 4.

3. Polymerisable composition according to one or more of the previous claims, **characterised in that** according to the general Formula (I) of the component a) at least one organic group R¹, R² and R³ each independently of one another is selected from H, CH₃, C₂H₅, C₃H₇ and C₄H₉.

4. Polymerisable composition according to one or more of the previous claims, **characterised in that** the group Y of the component a) is based on oxirane, 2-methyloxirane, 2,3-dimethyloxirane and 2-ethyloxirane, wherein the number p of the constitutive units of Y is not greater than 6, but at least equal to 1.

5. Polymerisable composition according to one or more of the previous claims, **characterised in that** comonomers or cooligomers are used as the component b), which are selected from acrylic acid, methacrylic acid, crotonic acid, vinylacetic acid, maleic acid, fumaric acid and from monomers or oligomers that possess at least one acidic group of this type, wherein the carboxylic groups can be completely or partially esterified.

6. Polymerisable composition according to one or more of the previous claims, **characterised in that** comonomers or cooligomers are used as the component b), which are selected from oligomers of aromatic or aliphatic urethane-acrylate or urethane-methacrylate as well as adducts or copolymers of acrylic acid or methacrylic acid or hydroxyalkyl derivatives thereof with unsaturated dicarboxylic acids or with anhydrides of polybasic carboxylic acids or derivatives thereof.

7. Polymerisable composition according to one or more of the previous claims, **characterised in that** the components a) and b) are comprised in the following weight proportions relative to the total composition:
i) 1 to 80 wt.% of the component a)
ii) 20 to 95 wt.% of the component b).

8. Polymerisable composition according to claim 7, **characterised in that** it comprises at least one initiator for free radical and/or cationic polymerization as an additional component c), wherein the weight fraction of initiator in the total composition ranges from at least 0.02 wt.% to at most 10 wt.%.

9. Polymerisable composition according to one or both of claims 7 and 8, **characterised in that** the composition additionally comprises 1 to 20 wt.%, with respect to the total composition, of a component d) that represents a particulate inorganic oxide selected from oxides of silicon, titanium, zirconium, manganese, zinc, vanadium, molybdenum and tungsten with an average particle size of not more than 5 µm.

10. Polymerisable composition according to one or more of claims 7 to 9, **characterised in that** the composition additionally comprises 0.01 to 20 wt.%, with respect to the total composition, of an organic component e) that possesses both a polyether chain from at least 5 ethylene oxide and/or propylene oxide units as well as at least one carboxyl or ester group containing at least one polymerisable double bond and which differs from the component a).

11. Polymerisable composition according to one or more of claims 7 to 10, **characterised in that** the weight fractions of the components a) to e) totalise at least 50 wt.%, wherein the weight fraction of the additional components is less than 50 wt.%.

12. Polymerisable composition according to one or more of the previous claims, **characterised in that** the composition comprises not more than 10 wt.% of components that on curing by polymerisation are not incorporated into the resulting layer and that as pure components have a boiling point of maximum 250 °C under normal pressure.

13. A process for a corrosion protective and paint adhesion improving coating for a metallic surface, **characterised in that** the following process steps are carried out in sequence:
(i) contacting a polymerisable composition according to one or more of the previous claims with the metallic surface at a process temperature of at least 15 °C, but not at a higher process temperature than 80 °C;
(ii) optionally removing the excess amount of the polymerisable composition from the metallic surface;
(iii) curing the film of the polymerisable composition present on the metallic surface by means of a thermal process or high energy irradiation within at least 10⁻⁵ seconds and not more than 10 seconds.

14. Process according to claim 13, **characterised in that** the coated metallic surface is selected from a surface of steel, zinc, galvanised or alloy galvanised steel, stainless steel and/or a surface of aluminium and its alloys.

## Revendications

1. Composition polymérisable pour l'enduction de protection contre la corrosion de surfaces métalliques, contenant :
a) au moins un composé répondant à la formule générale suivante (I) : 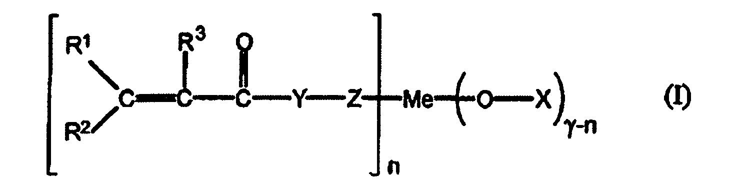 dans laquelle :
- R¹ et R² sont choisis, respectivement indépendamment l'un de l'autre, parmi un atome d'hydrogène, un groupe alkyle en C₁-C₁₂, des groupes arylalkyle ou parmi le groupe -CO-O-W où W représente un atome d'hydrogène, un groupe alkyle en C₁-C₁₂ ou Me ;
- R³ représente un atome d'hydrogène ou un groupe alkyle en C₁-C₁₂;
- Me représente un atome de métal possédant le degré d'oxydation γ, qui est choisi parmi le groupe constitué par le silicium, le titane, le zirconium, le manganèse, le zinc, le vanadium, le molybdène et le tungstène ;
- X représente un atome d'hydrogène, un groupe alkyle en C₁-C₁₂, un groupe aryle ou un groupe aralkyle, un groupe alcoxy ou un groupe aryloxy ou 2(-O-X) représente un groupe acétylacétonate ;
- n = 1 à γ-1 et γ désigne le degré d'oxydation du métal Me ;
- Y représente un groupe alcoxy ou un groupe polyalcoxy répondant à la formule générale suivante (II) : 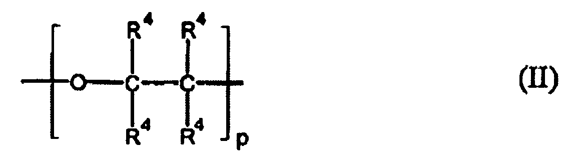
dans laquelle le groupe Y est lié, via la fonction oxo à la partie du composé (I), qui porte la liaison double oléfinique ;
les radicaux R⁴ représentent, respectivement indépendamment l'un de l'autre, un atome d'hydrogène ou un groupe alkyle linéaire ne contenant pas plus de 6 atomes de carbone ; et
p est égal à au moins 1, mais n'est pas supérieur à 10, et pour le cas où p est égal à 1, au moins un radical R⁴ ne représente pas un atome d'hydrogène ; et
le groupe Z est choisi parmi :
un atome d'oxygène, un groupe NH, un atome de soufre, un groupe O-C(=O)-Z^{b}-O, un groupe O-C(=O)-Z^{b}-NH, un groupe O-C(=O)-Z^{b}-S, un groupe O-C(=O)-Z^{b}-C(=O)-O, un groupe O-C(=O)-Z^{b}-P(=O)-O, un groupe O-C(=O)-Z^{b}-P(=O)₂-O, un groupe O-C(=O)-Z^{b}-O-P(=O)-O ou un groupe O-C(=O)-Z^{b}-O-P (=O)₂-O, où Z^{b} représente un groupe organique et le groupe carboxyle -O-C(=O)- est lié au groupe Y, et
b) en plus du composant a), au moins un comonomère ou un cooligomère qui présente au moins un groupe carboxyle ou un groupe ester et au moins une liaison double oléfinique.

2. Composition polymérisable selon la revendication 1, **caractérisée en ce que** le groupe organique Z^{b} est choisi parmi :
- un groupe alkyle linéaire ou ramifié ;
- un groupe alkylène linéaire ou ramifié contenant des liaisons doubles oléfiniques ;
- un groupe du type -(CH₂)ₓ-C₆H₄-(CH₂)_{y}-, où x et y représentent, respectivement indépendamment l'un de l'autre, des nombres entiers de 0 à 4.

3. Composition polymérisable selon une ou plusieurs des revendications précédentes, **caractérisée en ce que**, conformément à la formule générale (I), le composant a) représente au moins un radical organique R¹, R² et R³ choisis, respectivement indépendamment l'un de l'autre, parmi un atome d'hydrogène, un groupe CH₃, un groupe C₂H₅, un groupe C₃H₇ et un groupe C₄H₈.

4. Composition polymérisable selon une ou plusieurs des revendications précédentes, **caractérisée en ce que** le groupe Y du composant a) est à base d'oxirane, du 2-méthyl-oxirane, du 2,3-diméthyloxirane et du 2-éthyl-oxirane, le nombre p des unités constituantes de Y n'étant pas supérieur à 6, mais étant au moins égal à 1.

5. Composition polymérisable selon une ou plusieurs des revendications précédentes, **caractérisée en ce que**, à titre de composant b), on utilise des comonomères ou des cooligomères, qui sont choisis à partir de l'acide acrylique, de l'acide méthacrylique, de l'acide crotonique, de l'acide vinylacétique, de l'acide maléique, de l'acide fumarique et à partir de monomères ou d'oligomères qui présentent au moins un groupe acide de ce type, les groupes d'acides carboxyliques pouvant être estérifiés de manière complète ou partielle.

6. Composition polymérisable selon une ou plusieurs des revendications précédentes, **caractérisée en ce que**, à titre de composant b), on utilise des comonomères ou des cooligomères, qui sont choisis à partir d'oligomères aromatiques ou aliphatiques d'uréthane-acrylate ou d'uréthane-méthacrylate, ainsi que d'adduits ou de copolymères d'acide acrylique ou d'acide méthacrylique ou de leurs dérivés hydroxyalkylés avec des acides dicarboxyliques insaturés ou avec des anhydrides d'acides carboxyliques polybasiques ou leurs dérivés.

7. Composition polymérisable selon une ou plusieurs des revendications précédentes, **caractérisée en ce que** les composants a) et b) sont contenus dans les proportions suivantes par rapport à la composition totale :
i) le composant a), à concurrence de 1 à 80 % en poids ;
ii) le composant b), à concurrence de 20 à 95 % en poids.

8. Composition polymérisable selon la revendication 7, **caractérisée en ce qu'**elle contient, à titre de composant supplémentaire c), au moins un initiateur pour au moins une polymérisation à radicaux libres et/ou cationique, la proportion de l'initiateur dans la composition totale s'élevant au minimum à 0,02 % en poids et au maximum à 10 % en poids.

9. Composition polymérisable selon une ou plusieurs des revendications 7 et 8, **caractérisée en ce que** la composition contient en outre, par rapport à la composition totale, un composant d) à concurrence de 1 à 20 % en poids, qui représente un oxyde inorganique particulaire choisi parmi des oxydes du silicium, du titane, du zirconium, du manganèse, du zinc, du vanadium, du molybdène et du tungstène possédant une granulométrie moyenne qui n'est pas supérieure à 5 µm.

10. Composition polymérisable selon une ou plusieurs des revendications 7 à 9, **caractérisée en ce que** la composition contient en outre, par rapport à la composition totale, un composant organique e) à concurrence de 0,01 à 20 % en poids, qui présente aussi bien une chaîne de polyéther constituée par au moins 5 unités d'oxyde d'éthylène et/ou d'oxyde de propylène qu'au moins un groupe carboxyle ou un groupe ester comprenant au moins une liaison double polymérisable et qui se distingue du composant a).

11. Composition polymérisable selon une ou plusieurs des revendications 7 à 10, **caractérisée en ce que** les proportions pondérales des composants a) à e) s'additionnent à concurrence d'au moins 50 % en poids, la proportion pondérale des composants supplémentaires étant inférieure à 50 % en poids.

12. Composition polymérisable selon une ou plusieurs des revendications précédentes, **caractérisée en ce que** la composition contient, à concurrence d'une valeur qui n'est pas supérieure à 10 % en poids, des composants qui, lors du durcissement par polymérisation, ne sont pas incorporés dans la couche que l'on obtient et qui possèdent, à titre de composant pur, un point d'ébullition s'élevant au maximum à 250 °C sous pression normale.

13. Procédé pour l'enduction faisant office de protection contre la corrosion et d'agent conférant une adhérence à la peinture d'une surface métallique, **caractérisé en ce qu'**on réalise successivement les étapes opératoires suivantes :
(i) la mise en contact d'une composition polymérisable selon une ou plusieurs des revendications précédentes avec la surface métallique à une température de traitement d'au moins 15 °C, mais à une température de traitement qui n'est pas supérieure à 80 °C ;
(ii) le cas échéant, l'élimination de la quantité en excès de la composition polymérisable de la surface métallique ;
(iii) le durcissement du film de la composition polymérisable se trouvant sur la surface métallique au moyen d'un procédé thermique ou d'une exposition à un rayonnement riche en énergie dans un laps de temps minimal de 10⁻⁵ secondes et qui n'est pas supérieur à 10 secondes.

14. Procédé selon la revendication 13, **caractérisé en ce que** la surface métallique enduite est choisie parmi une surface en acier, en zinc, en acier zingué ou en acier allié zingué, en acier inoxydable et/ou une surface en aluminium et ses alliages.
